# EUROPEAN PATENT APPLICATION

(11) **EP 1 079 134 A1**
(43) Date of publication of application: **28.02.2001**
(21) Application number: 99116526.7
(22) Date of filing: 24.08.1999
(51) Int. Cl.: F16D 65/06

(54) **Wheel tread conditioning brake shoe**

(71) Applicant: WESTINGHOUSE AIR BRAKE COMPANY, Wilmerding, PA 15148 (US)
(72) Inventor: Shute, Bruce W., West End, North Carolina 27376 (US); Formolo, Joseph F., Laurinburg, North Carolina 28353 (US)
(74) Representative: Petri, Stellan

(57) **Abstract**

A brake shoe (10) is adapted to engage the tread of a railroad car wheel via which the railroad car is guidably supported on a railed track for conditioning such car wheel thereby affecting adhesion between such wheel tread and railed track. Such brake shoe (10) comprises a backing plate (12) and a brake lining (16) affixed to such backing plate (12). Such brake lining (16) has a braking surface engageable with a wheel tread and further comprises a first and a second segment disposed on opposite sides of a midpoint of a key bridge (14) of the backing plate (12). There is a first material in the form of a friction composition suitable for braking such railroad car wheel. The first material is formed on each of the first and second segments and there is a second material dissimilar from the first material. The second material is disposed as an at least one discrete insert (22,23) in the first material, such second material conditions the railroad car wheel tread so as to affect adhesion between said wheel tread and the railed track. The second material has a wear rate dissimilar to that of the first material.

## Description

### FIELD OF THE INVENTION

The present invention is related to brake shoes for railway cars and, more particularly, to an improved railway car brake shoe that is adapted to influence the adhesion between the railway car wheel and the rail on which the rail runs.

### BACKGROUND OF THE INVENTION

Railroad locomotives and cars have historically provided braking effort through wheel tread braking. Brake shoe engagement with the wheel tread produces friction that dissipates the energy of momentum in the form of heat. In order for such braking to be effective, wheel rotation required. The adhesion due to the friction between the wheel tread and rail tends to maintain such wheel rotation, as the wheel is braked.

Excessive wheel wear and brake shoe change outs have been found to be cyclically high during the winter season. One theory attributes this, at least in part, to the more pronounced cleaning effect that the brake shoe has on the wheel as the result of the higher moisture contact during wintertime. In that such cleaning action tends to increase the contact friction or adhesion between the wheel and rail, increased contact stresses are created in the wheel, such contact stresses being particularly high during the guiding and steering action of the wheel set, particularly when encountering track curvature.

The combination of braking effort through friction between the brake shoe and wheel tread surface and the adhesion between the wheel and rail translates into thermal and contact stresses of the wheel, which often result in wheel damage. High thermal and contact stresses are known to contribute to minute failure of the wheel tread due to a condition known as spalling.

Another related problem encountered by some railroads where high levels of retardation are required is wheel sliding, which results in wheel tread flat spots. Such flat spots have a deleterious effect on equipment, lading, and passengers due to the high vibration and noise produced by the flat spots. Repairing such a damaged wheel requires removal of the wheel and subsequent machining of the wheel tread to remove the flat spot.

### SUMMARY OF THE INVENTION

The present invention provides a brake shoe adapted to engage the tread of a railroad car wheel via which the railroad car is guidably supported on a railed track for conditioning such car wheel thereby affecting adhesion between such wheel tread and railed track. Such brake shoe comprises a backing plate and a brake lining affixed to such backing plate. Such brake lining has a braking surface engageable with a wheel tread and further comprises a first and a second segment disposed on opposite sides of a midpoint of a key bridge of the backing plate. There is a first material in the form of a friction composition suitable for braking such railroad car wheel. The first material is formed on each of the first and second segments and there is a second material dissimilar from the first material. The second material is disposed as an at least one discrete insert in the first material, such second material conditions the railroad car wheel tread so as to affect adhesion between said wheel tread and the railed track. The second material has a wear rate dissimilar to that of the first material.

### OBJECTS OF THE INVENTION

It is, therefore, one of the primary objects of the present invention to provide a friction composition brake shoe capable of altering the adhesion between the wheel of a railway car and the track rail without adversely affecting the braking action.

Another object of the invention is to incorporate a conditioning agent in the brake shoe composition friction material to decrease the adhesion between the wheel and the rail.

It is still another object of the invention to incorporate a conditioning agent in the brake shoe composition friction material to increase the adhesion between the wheel and the rail.

Still another object of the invention is to control the rate of application of a brake shoe conditioning agent to a railway car wheel tread.

In addition to the numerous objects and advantages of the present invention which have been described with some degree of particularity above, it should be both noted and understood that a number of other important objects and advantages of the improved composition brake shoe will become more readily apparent to those persons who are skilled in the relevant railway braking art from the following more detailed description of the invention, particularly, when such detailed description is taken in conjunction with the attached drawing Figures and with the appended claims.

### BRIEF DESCRIPTION OF THE DRAWINGS

Figure 1 is a plan view showing the braking surface of a brake shoe block in accordance with one embodiment of the invention.

Figure 2 is a section view taken along the lines 2-2 of Figure 1.

Figure 3 is a plan view showing the braking surface of a brake shoe block according to another embodiment of the invention.

Figure 4 is a section view taken along the lines 4-4 of Figure 3.

### BRIEF DESCRIPTION OF THE PRESENTLY PREFERRED AND ALTERNATE EMBODIMENTS OF THE INVENTION

Prior to proceeding to the more detailed description of the various embodiments of the invention, it should be noted that, for both the sake of clarity and understanding of the present invention, identical components which have identical functions have been identified with identical reference numerals throughout the several views which have been illustrated in the attached drawing Figures.

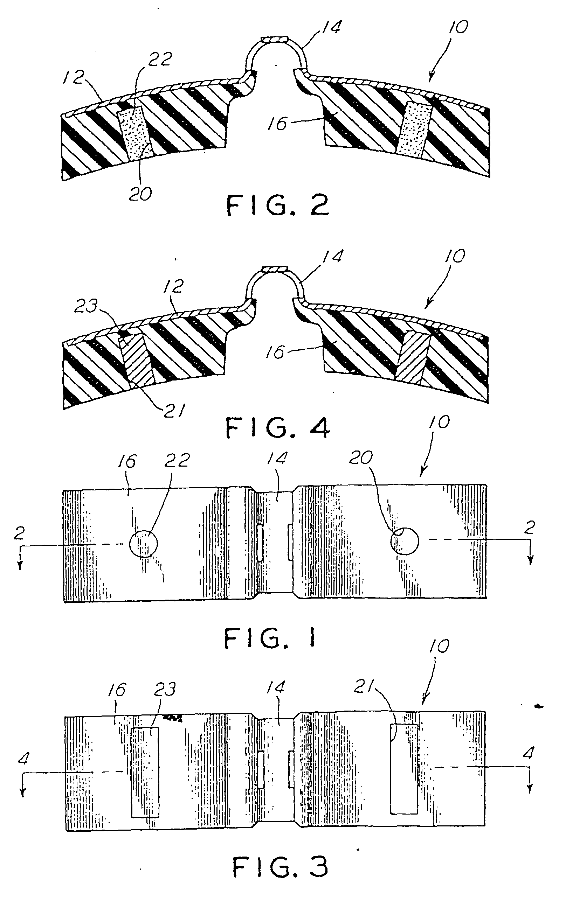

Reference is now made to Figures 1 and 2. Illustrated therein is a brake shoe 10 comprising a back plate 12 having a key bridge 14 for affixing the brake shoe 10 to a brake head (not shown) by conventional means such as a brake shoe key (also not shown). Affixed to the backing plate 12 is a molded brake shoe block 16, which is preferably segmented so as to be separated along a centerline of the brake shoe bridge. The molded brake shoe block 16 is formed from a composition friction material, such as is typically employed in railroad type brake shoes. Such molded brake shoe block 16 is preferably affixed to the backing plate 12 by being bonded thereto during the process of molding such friction brake block 16.

Each segment of brake block 16 is formed with a recess 20 that is preferably cylindrical in shape. Such recess 20 is designed to receive an insert 22 having a shape corresponding generally to that of recess 20. Insert 22 is a material dissimilar from the composition friction material of the brake shoe block 16. In one embodiment of the invention such insert 22 constitutes a lubricant, such as molybdenum disulfide. Although at the present time molybdenum disulfide is a preferred lubricant, it is within the scope of the invention to use a different lubricant.

Since molybdenum disulfide is normally available in powder form, it is envisioned that the lubricant is combined with a suitable resin and hardened into a preformed insert 22 that corresponds to the shape of recess 20. It is presently preferred that the molybdenum disulfide be combined with such resin substantially in a proportion of about 95% lubricant and 5% resin. In one aspect of the invention, insert 22 may be incorporated with the composition friction material of brake block 16 during the aforementioned molding process, such that recess 20 is actually formed by and thus conforms to the shape of insert 22, which is accordingly secured therein. In another aspect of the invention, insert 22 is secured by a press fit into molded-in recess 20. Other means may also be viable for securing insert 22 into such recess 20.

In addition, such other methods of incorporating the lubricant in the composition friction material of brake block 16 include the blending of the powder-like lubricant with the composition friction material prior to molding, whereby a substantially homogeneous dispersion of the molybdenum disulfide throughout the friction composition material is realized following molding into brake block 16. Another method involves pelletizing the molybdenum disulfide and interspersing such pellets in the composition friction material prior to molding into brake block 16, such that a distinctly non-homogeneous distribution of the lubricating material is realized when the molding process is complete.

In all cases, however, the rate of wear of the lubricating material is greater than the rate of wear of the composition friction material, so that the latter controls the rate of application of the lubricating material to the wheel tread. In addition, the total surface area of such lubricating inserts 22 is generally in the range of between about 5% and 15% of the surface area of the brake block 16. The range being chosen in accordance with their respective wear rates so that when brake shoe 10 is brought into braking engagement with the tread of a railroad car wheel, a light film of lubricant is deposited on the wheel tread. In thus applying such a desired film of lubricant, the friction level between the wheel tread and the rail can be reduced sufficiently so as to allow for a partial slip condition to exist, particularly on track curvature, thereby lowering wheel/rail contact stresses. By controlling the rate of application of the lubricant, reduced wheel stress can be achieved, while still providing wheel/rail adhesion levels as required to support such brake force as necessary to achieve a desired rate of retardation.

Reference is now made to Figures 3 and 4. Illustrated therein is a brake shoe 10 having a backing plate 12, a key bridge 14 and a molded composition friction brake block 16.

Each segment of brake block 16 is formed with a recess 20 that is preferably rectangular in shape. Such recess 21 is designed to receive an insert 23 having a shape corresponding generally to that of recess 20. Insert 23 is a material dissimilar from the composition friction material of the brake shoe block 16. In this embodiment of the invention such insert 23 is comprised of an abrasive material, such as cast iron. Of course other suitable abrasives are also within the scope of the invention as cast iron is just used as an example, albeit a preferred example.

In one aspect of the invention, as shown in Figures 3 and 4, the insert 23, preferably cast iron, is incorporated with brake block 16 during the process of molding the composition friction brake block 16, such that recess 21 conforms to the shape of the insert 23, which is accordingly secured therein.

In addition, such other methods of incorporating the abrasive with the composition friction brake block 16 include homogenous dispersion of a suitable abrasive and non-homogenous blending of the abrasive and the composition friction material prior to molding thereof.

In all such cases, regardless of which abrasive is used, the rate of wear of the abrasive material is greater than that of the composition friction material. Rectangular inserts 23 traverse a major portion of the width of the brake block 16, so that in response to engagement of brake block 16 with the wheel tread during a brake application, the wheel tread is abraded. Cast iron has been found to satisfactorily produce a desired micro level of wheel tread abrasion. To obtain a desired abrasion of a wheel tread it is preferred that the surface area of such insert of the abrasive material be generally in a range of between about 5% and about 25% of the surface area of the brake shoe block. Such conditioning of the wheel tread with successive brake applications establishes and maintains an optimum level of adhesion to prevent break-away of rolling contact between the wheels and the rails. In this manner, not only is wheel rotation maintained to assure that vehicle retardation can be achieved through on-tread braking, but such wheel rotation decreases the occasion of slid flat spots on the wheel tread.

In accordance with both of the foregoing aspects of the invention, the wheel tread conditioning provides significantly increases wheel life and decreased maintenance costs, a reduced vibration environment for the rail car equipment, lading and passengers, and reduced noise levels.

While a presently preferred and an alternative embodiment of the present invention have been described in detail above, it should be understood that various other adaptations and/or modifications of the present invention can be made by those persons who are particularly skilled in the art related to braking systems and, more particularly, friction composition brake shoes used on railway vehicles without departing from either the spirit of the invention or the scope of the appended claims.

## Claims

1. A brake shoe adapted to engage the tread of a railroad car wheel via which the railroad car is guidably supported on a railed track, said brake shoe comprising:
a) a backing plate; and
b) a brake lining affixed to said backing plate and having a braking surface engageable with said wheel tread, said brake lining comprising:
i) a first and a second segment disposed on opposite sides of a midpoint of a key bridge of said backing plate;
ii) a first material in the form of a friction composition suitable for braking said railroad car wheel, said first material formed on each of said first and said second segments and having at least one recess formed in said braking surface of said first material; and
iii) a second material dissimilar from said first material, said second material disposed as an at least one discrete insert in said first material, said second material conditioning said railroad car wheel tread so as to affect adhesion between said wheel tread and said railed track, said second material having a wear rate dissimilar to that of said first material.

2. A brake shoe, according to claim 1, wherein said second material is a lubricant, said railroad car wheel tread being conditioned thereby to reduce the adhesion between said wheel tread and said railed track.

3. A brake shoe, according to claim 2, wherein said lubricant is molybdenum disulfide.

4. A brake shoe, according to claim 1, wherein said second material is an abrasive, said car wheel tread being conditioned thereby to increase the adhesion between said wheel tread and said railed track.

5. A brake shoe, according to claim 1, wherein said second material is a solidified mixture of about 95% molybdenum disulfide and about 5% resin.

6. A brake shoe, according to claim 5, wherein said solidified mixture corresponds in shape to said at least one recess.

7. A brake shoe, according to claim 1, wherein said at least one discrete insert in said first material is cylindrical in shape.

8. A brake shoe, according to claim 7, wherein the total area of said at least one discrete insert in said first material is in the range of between about 5% and about 15% of the total area of said braking surface.

9. A brake shoe, according to claim 7, wherein said cylindrically shaped said at least one discrete insert is molybdenum disulfide.

10. A brake shoe, according to claim 1, wherein said at least one discrete insert in said first material is rectangular in shape.

11. A brake shoe, according to claim 10, wherein the total area of said at least one discrete insert in said first material is in the range of between about 5% and about 25% of the total area of said braking surface.

12. A brake shoe, according to claim 10, wherein said rectangular shaped said at least one discrete insert is cast iron.

13. A brake shoe, according to claim 1, wherein said at least one discrete insert in said first material is preformed and said at least one recess of said first material having a shape conforming thereto so as to provide an interference fit. therewith.

14. A brake shoe, according to claim 1, wherein said at least one discrete insert in said first material is two.

15. A brake shoe, according to claim 14, wherein said two inserts are disposed as a first insert in a first segment of said first material and a second insert disposed in said second segment of said first material.
